# EUROPÄISCHE PATENTSCHRIFT

(11) **EP 1 183 895 B1**
(45) Veröffentlichungstag und Bekanntmachung des Hinweises auf die Patenterteilung: **22.11.2006**
(21) Anmeldenummer: 00945679.9
(22) Anmeldetag: 09.05.2000
(51) Int. Cl.: H04Q 7/38

(54) **EINRICHTUNG ZUM SCHUTZ DES ERSTEINSATZES EINER PROZESSOR-CHIPKARTE**
DEVICE FOR PROTECTING THE INITIAL UTILIZATION OF A PROCESSOR/CHIP CARD
PROCEDE POUR LA PROTECTION DE LA PREMIERE UTILISATION D'UNE CARTE A PUCE MICROPROCESSEUR

(30) Priorität: 10.05.1999 DE 19921524
(43) Veröffentlichungstag der Anmeldung: 06.03.2002
(73) Patentinhaber: Giesecke & Devrient GmbH, 81677 München (DE)
(72) Erfinder: RICHTER, Oliver, 81827 München (DE)
(74) Vertreter: Klunker . Schmitt-Nilson . Hirsch
(86) Internationale Anmeldenummer: PCT/EP2000/004141
(87) Internationale Veröffentlichungsnummer: WO 2000/069204

(56) Entgegenhaltungen:
- DE-A- 19 527 715
- DE-A- 19 818 998
- DE-A- 19 820 422
- US-A- 5 724 423

## Beschreibung

Die Erfindung betrifft ein Verfahren zum Schutz vor Angriffen auf eine Prozessor-Chipkarte beziehungsweise deren nicht autorisierten Einsatz in einem Netzwerk zur Nachrichtenübertragung, vorzugsweise einem GSM-Netzwerk nach dem Oberbegriff des Anspruchs 1 sowie eine entsprechende Chipkarte nach dem Oberbegriff des Anspruchs 9.

Bei GSM-Systemen ist es bekannt, daß sich zum Einsatz der Chipkarte (Subscriber Identity Module SIM) zunächst der Kartenbenutzer mittels einer persönlichen Identifikationsnummer (PIN) als zur Benutzung berechtigt ausweisen muß. Um an dieser Stelle Mißbrauch zu vermeiden, ist es für die PIN-Übermittlung an den Kartenbenutzer bekannt, PIN/PUK-Briefe durch den Kartenhersteller oder den Kartenpersonalisierer herstellen zu lassen und diese PIN/PUK-Briefe an den Kartenbenutzer auszuhändigen.

Eine weitere, systemrelevante Sicherheitsmaßnahme besteht in der Versiegelung des PIN/PUK-Briefs durch den Kartenhersteller oder Kartenpersonalisierer. Die Unversehrtheit des Siegels auf dem PIN/PUK-Brief zeigt dem Kartenbenutzer an, daß keinem anderen Kartenbenutzer die beim Kartenhersteller auf den PIN/PUK-Brief aufgebrachten Geheimnummern bekannt sein können. Da die Geheimnummern auf dem PIN/PUK-Brief durch den Kartenhersteller oder Kartenpersonalisierer zufällig gewählt wurden und nur noch im geheimen Speicher der SIM-Karte abgelegt sind, kann der Kartenbenutzer davon ausgehen, daß durch Öffnung des PIN/PUK-Briefs nur er selbst in Kenntnis der Geheimnummern gelangt.

Um bei der PIN-Eingabe Mißbrauch zu vermeiden, ist es für die PIN-Eingabe bekannt, einen Fehlerzähler vorzusehen, der nach Überschreitung einer zulässigen Anzahl von Fehlversuchen den weiteren Gebrauch der Karte vorläufig unterbindet. Zum Schutz des unnötigen Sperrens einer Karte durch versehentliche Falscheingabe der PIN ist es bekannt, auf der Karte einen Personal Unblocking Key (PUK) vorzusehen, mit dessen Hilfe die Festlegung einer neuen PIN möglich ist und der die Karte für den Einsatz im Netzwerk wieder freischaltet. Um bei der PUK-Eingabe Mißbrauch zu vermeiden, ist es bekannt, einen Fehlerzähler vorzusehen, der nach Überschreitung einer zulässigen Anzahl von Fehlversuchen den weiteren Gebrauch der Karte endgültig unterbindet.

Bei dem bekannten Stand der Technik wird dem Kartenbenutzer die Möglichkeit eingeräumt, die einmal durch den Kartenhersteller oder Kartenpersonalisierer festgelegte PIN durch einen selbstgewählten Wert zu ersetzen. Der Wert des PUK kann vom Kartenbenutzer nicht verändert werden. Um dem Kartenbenutzer bei Verlust oder nicht greifbarem PIN/PUK-Brief, aber versehentlich gesperrter PIN, den PUK dennoch mitteilen zu können, ist es bekannt, als besondere Dienstleistung in manchen GSM-Netzen den PUK zusätzlich in einer Datenbank zentral beim Netzbetreiber für alle herausgegebenen Karten zu speichern. Auf Anfrage durch den Kartenbenutzer und nach Überprüfung der Identität des Kartenbenutzers wird der PUK zur Freischaltung der PIN dem Kartenbenutzer mitgeteilt.

Auch in einem derartigen System besteht die Gefahr, daß durch unerlaubte Öffnung des PIN/PUK-Briefs und beispielsweise durch Neudruck des PIN/PUK-Briefs oder durch Manipulation des PIN/PUK-Brief-Siegels der rechtmäßige Kartenbenutzer im Glauben ist, Erstbenutzer der Karte zu sein, obwohl bereits vorher ein unrechtmäßiger Kartenbenutzer die Karte auf Kosten des rechtmäßigen Kartenbenutzers vorübergehend in Betrieb genommen hat.

DE 195 27 715 A1 beschreibt ein Verfahren zur Nutzeridentifikation bei Datenfunkverbindungen, wobei die zur Nutzeridentifikation erforderlichen Daten auf einem gesonderten Datenträger getrennt von einem Endgerät abgelegt werden. Die Nutzeridentifikation wird durch Kommunikation zwischen Datenträger und Endgerät durchgeführt.

Wesentlich hierbei ist, daß eine Trennung der Nutzerinformation vom Endgerät stattfindet und der Benutzer sowohl mit einem Endgerät als auch mit einem Datenträger, bevorzugt in Form einer Karte oder Chipkarte, ausgerüstet wird. Anders ausgedrückt wird das Endgerät physikalisch und logisch in eine anonyme, unpersönliche Komponente und einen den Teilnehmer und dessen besondere Merkmale identifizierenden Anteil, nämlich die Karte, aufgeteilt.

Hierbei ist die Nutzeridentifikation auf der Karte abgelegt, und eine Überprüfung dieser Nutzeridentifikation erfolgt durch das Endgerät. Eine Kommunikation mit einer übergeordneten Zentralstelle zur Nutzerindentifikation ist nicht erforderlich.

US 5,724,423 offenbart einen Benutzerauthentifizierungsdienst, der sowohl hochsicher als auch benutzerfreundlich ist. Um auf einen bestimmten Dienst zuzugreifen, gibt ein Benutzer einfach eine persönliche Identifizierungszahl (PIN) unter Verwendung eines tragbaren Terminalgerätes, welches die PIN codiert, ein. Im besonderen wird eine Zeichenposition der PIN des Benutzers bestimmt und es wird ein Zufallscode mit einer auswählbaren Länge bei jeder Diensttransaktion durch den Benutzer erzeugt. Die PIN des Benutzers wird unter Verwendung eines aus einer Vielzahl von verfügbaren, pseudozufälligen Verschlüsselungsalgorithmen verschlüsselt, um eine verschlüsselte PIN zur Verfügung zu stellen. Die verschlüsselte PIN wird dann mit dem Code an der bestimmten Position kombiniert, bevor es über ein Kommunikationsnetzwerk übertragen wird. Beim Empfang wird die codierte PIN unter Verwendung einer analogen Prozedur decodiert, um zu bestimmen, ob der Benutzer autorisiert ist. Es werden eine Vielzahl von Sicherheitsstufen zur Verfügung gestellt, die eine Vielzahl von Verschlüsselungsalgorithmen haben, und die mit jeder zunehmenden Stufe Verschlüsselungsalgorithmen von zunehmender Komplexität und Raffiniertheit zur Verfügung stellen. Ein Benutzer kann auch eine aktuelle PIN einfach und sicher von dem tragbaren Gerät aus ändern, ohne mit einem Servicecenter Kontakt aufnehmen zu müssen.

Es ist deshalb Aufgabe der Erfindung, ein sicheres Verfahren zum Schutz vor unbemerkter Öffnung von PIN/PUK-Briefen, bei dem der Erstbenutzer der

Karte über die Erstbenutzung der Karte in Kenntnis gesetzt wird sowie eine entsprechende Chipkarte anzugeben.

Diese Aufgabe wird ausgehend von den Merkmalen des Oberbegriffs des Anspruchs 1 bzw. 9 durch die jeweiligen kennzeichnenden Merkmale gelöst. Vorteilhafte Ausgestaltungen der Erfindung sind in den abhängigen Ansprüchen angegeben.

Die Erfindung betrifft ein Verfahren zur Überprüfung und Anzeige des Ersteinsatzes einer Prozessor-Chipkarte mittels einer Zusatzanwendung auf der Prozessor-Chipkarte selbst, die alle zur sicheren Prüfung notwendigen Schritte steuert oder zumindest wesentlich beeinflußt.

Eine vorteilhafte Ausgestaltung der Erfindung zeigt den Einsatz der Applikation, um geheime Schlüssel, die zur Authentifikation des Kartenbenutzers gegenüber der Karte benötigt werden, durch den Kartenbenutzer festlegen zu lassen oder dem Kartenbenutzer diese Schlüssel mitzuteilen, wobei die Karte auf dem Weg zwischen Kartenhersteller, Kartenherausgeber und Kartenbenutzer transportgesichert bleibt.

Ein weiterer vorteilhafter Einsatz der Erfindung ist die Ergänzung oder der Ersatz von aufwendigen und teils kostenintensiven Verfahren zur Transportsicherung von Prozessor-Chipkarten zwischen Kartenhersteller und Kartenbenutzer, wie zum Beispiel PIN/PUK-Briefen, durch die Zusatzanwendung in der Prozessor-Chipkarte, welche die Aufgabe eines PIN/PUK-Briefs ergänzt oder im wesentlichen übernimmt.

Gemäß einer weiteren vorteilhaften Ausführungsform kann die Erfindung auch als Bestandteil eines in wesentlichen Teilen in der Prozessor-Chipkarte selbst ablaufenden Systems zur individuellen Vergabe und Personalisierung von geheimen Schlüsseln eingesetzt werden, die nicht nur dem Kartenbenutzer, sondern auch dem Kartenherausgeber, etwa einem Mobilfunknetz-Betreiber oder Netzdienste-Anbieter, zugänglich gemacht werden sollen.

Eine weitere vorteilhafte Ausgestaltung der Erfindung sieht vor, daß bei Festlegung der Geheimschlüssel durch den Kartenbenutzer selbst, diese geheimen Schlüssel mehrmals vom Kartenbenutzer abgefragt werden, um eine versehentliche Falscheingabe zu vermeiden.

Alternativ oder zusätzlich kann nach Festlegung der Geheimzahlen durch den Kartenbenutzer oder durch die Karte selbst, einer entsprechende Netzwerkkomponente eine Information übermittelt werden, wonach im Netzwerk der Ersteinsatz der Karte mitgeteilt oder der Wert der Geheimnummer übermittelt wird.

Gemäß einer weiteren vorteilhaften Ausgestaltung der Erfindung werden bei Erstinbetriebnahme der Karte die Geheimzahlen zusätzlich oder alternativ über die Sprach- oder Hörvorrichtung des Mobilfunkgeräts ein- oder ausgegeben, wodurch insbesondere die Übermittlung oder Festlegung der geheimen Schlüssel an oder durch sehbehinderte Kartenbenutzer erleichtert und besser gesichert werden kann.

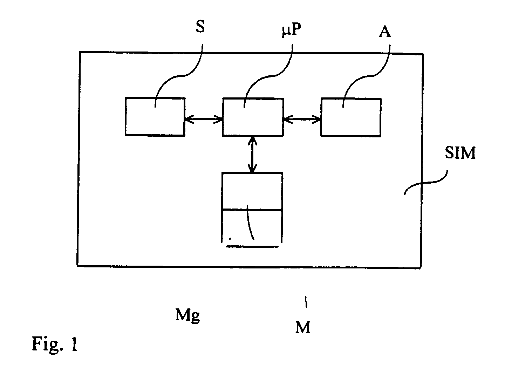

Die Fig. 1 zeigt ein Ausführungsbeispiel einer Chipkarte SIM, die eine Schnittstelle S zum Datenaustausch mit einem Mobilfunktelefon aufweist sowie einen Mikroprozessor µP, der mit einer Applikation A und einem Speicher M, Mg verbunden ist. Die Applikation A kann im wesentlichen als SIM Application Toolkit Applikation ausgebildet sein und ist durch den Kartenhersteller oder Kartenpersonalisierer in die Karte eingebracht worden. Der Speicher ist unterteilt in den üblichen Speicherbereich M, in dem Daten ausgelesen und eingeschrieben werden können und in den geheimen Speicherbereich Mg, in dem zumindest die Information über den Ersteinsatz der Chipkarte abgelegt ist. Wenn über die Schnittstelle S die Karte durch einen Kartenbenutzer in Betrieb genommen wird, so prüft die Applikation mittels Zugriff auf den geheimen Speicher Mg, ob es sich um den Ersteinsatz der Karte handelt.

Bei Ersteinsatz der Karte wird der Kartenbenutzer durch die Applikation A informiert und zur Bestätigung der Inbetriebnahme der Karte aufgefordert. Bei positiver Bestätigung durch den Kartenbenutzer ändert die Applikation die Information über den Ersteinsatz im geheimen Speicher Mg und verändert dadurch ihr Verhalten bei einer späteren Wieder-Inbetriebnahme der Karte.

## Patentansprüche

1. Verfahren zur Inbetriebnahme einer Prozessor-Chipkarte für ein Netzwerk zur Nachrichtenübermittlung, vorzugsweise einem GSM-Netzwerk, bei dem sich der Kartenbenutzer gegenüber der Prozessor-Chipkarte (SIM) durch eine persönliche Geheimnummer ausweisen muß **dadurch gekennzeichnet, daß**
- zur Ablaufsteuerung des Ersteinsatzes zunächst die Prozessor-Chipkarte beim Kartenhersteller oder Karten-Personalisierer mit einer Zusatzapplikation, vorzugsweise unter Verwendung des SIM Application Toolkit, versehen wird, die den Einsatz zur Benutzung im Netzwerk verhindert und statt dessen nur einen lokalen Einsatz mittels Kartenleser oder Kartenterminal, vorzugsweise einem Mobilfunkgerät erlaubt, und
- bei Ersteinsatz der Prozessor-Chipkarte die Applikation ohne weitere Prüfung einer Geheimzahl ein Anzeigesignal für die Erstbenutzung und eine Bestätigungsanforderung ausgibt, und
- nach Erhalt eines Bestätigungssignales die Zusatzapplikation deaktiviert oder deren Ablauf so verändert wird, daß beim nächsten Einsatz der Karte ein Anzeigesignal ausgegeben wird, welches angibt, daß die Erstinbetriebnahme bereits erfolgt ist, und der Einsatz der Prozessor-Chipkarte im Netzwerk freigegeben wird.

2. Verfahren nach Anspruch 1, **dadurch gekennzeichnet, daß** zur Aktivierung der Zusatzapplikation eine vorher, bevorzugt durch den Kartenhersteller oder Karten-Personalisierer, festgelegte persönliche Geheimzahl eingegeben werden muß.

3. Verfahren nach Anspruch 1 oder 2, **dadurch gekennzeichnet, daß** nach Ersteinsatz der Karte und vor Deaktivierung oder Zustandsänderung der Zusatzapplikation die Eingabe einer persönlichen Geheimzahl (PIN) und /oder einer Geheimzahl (PUK) für die Änderung oder Entsperrung der persönlichen Geheimzahl (PIN) angefordert wird.

4. Verfahren nach einem der Ansprüche 1 bis 3, **dadurch gekennzeichnet, daß** einzelne oder alle persönlichen Geheimzahlen auf der Karte bereits durch den Kartenhersteller auf der Prozessor-Chipkarte personalisiert wurden und diese Geheimzahlen beim Ersteinsatz zum späteren Gebrauch am Kartenleser oder Kartenterminal, vorzugsweise einem Mobilfunkgerät, angezeigt werden.

5. Verfahren nach einem der Ansprüche 1 bis 4, **dadurch gekennzeichnet, daß** einzelne oder alle persönlichen Geheimzahlen auf der Karte durch einen in der Karte eingebauten Zufallszahlengenerator vorgegeben werden und diese Geheimzahlen während des Ersteinsatzes am Kartenleser oder Kartenterminal, vorzugsweise einem Mobilfunkgerät, angezeigt werden.

6. Verfahren nach einem der Ansprüche 1 bis 5, **dadurch gekennzeichnet, daß** einzelne oder alle persönlichen Geheimzahlen zur Übermittlung an das Netzwerk, vorzugsweise in verschlüsselter Form über einen Datenkanal, zusammengefaßt und unmittelbar oder zu einem späteren Zeitpunkt an eine zentrale Stelle beim Netzbetreiber oder Netzdienste-Anbieter gesendet werden.

7. Verfahren nach einem der Ansprüche 1 bis 6, **dadurch gekennzeichnet, daß** die bei der Erstinbetriebnahme festzulegenden Geheimzahlen nicht zum Zweck des Schutzes der Netzwerk-Applikation sondern zum Schutz einer Zusatzapplikation, bevorzugt einer SIM Application Toolkit Applikation, auf der SIM Karte verwendet werden.

8. Verfahren nach einem der Ansprüche 1 bis 7, **dadurch gekennzeichnet, daß** Informationen über den Ersteinsatz der Prozessor-Chipkarte und über die persönlichen Geheimzahlen über die Hör- oder Spracheinrichtungen des Kartenlesers, des Kartenterminals oder vorzugsweise des Mobilfunkgeräts aus- oder eingegeben werden.

9. Chipkarte mit einem Mikroprozessor (µP), einem Speicherbereich (M) und einer Schnittstelle (S), welche jeweils mit dem Mikroprozessor (µP) verbunden sind, für ein Verfahren zur Inbetriebnahme der Chipkarte für ein Netzwerk zur Nachrichtenübermittlung, vorzugsweise einem GSM-Netzwerk, bei dem sich der Kartenbenutzer gegenüber der Chipkarte durch eine persönliche Geheimnummer ausweisen muß, **gekennzeichnet durch**
einen Speicherbereich (A), in dem eine Anwendung zur Ablaufsteuerung des Ersteinsatzes der Chipkarte abgelegt ist, derart ausgestaltet, daß zur Ablaufsteuerung des Ersteinsatzes die Chipkarte mit einer Zusatzapplikation, vorzugsweise unter Verwendung des SIM Application Toolkit, versehen ist, die den Einsatz zur Benutzung im Netzwerk verhindert und statt dessen nur einen lokalen Einsatz mittels Kartenleser oder Kartenterminal, vorzugsweise einem Mobilfunkgerät erlaubt, und
einem geheimen Speicherbereich (Mg), in dem Daten zu dieser Anwendung gesichert abgelegt sind, derart ausgestaltet, daß bei Ersteinsatz der Chipkarte die Applikation ohne weitere Prüfung einer Geheimzahl ein Anzeigesignal für die Erstbenutzung und eine Bestätigungsanforderung ausgibt, und nach Erhalt eines Bestätigungssignales die Zusatzapplikation deaktiviert oder deren Ablauf so verändert wird, daß beim nächsten Einsatz der Karte ein Anzeigesignal ausgegeben wird, welches angibt, daß die Erstinbetriebnahme bereits erfolgt ist, und der Einsatz der Prozessorchipkarte im Netzwerk freigegeben wird.

## Claims

1. A method for putting into operation a processor chip card for a network for communication, preferably a GSM network, wherein the card user must identify himself with respect to the processor chip card (SIM) by a personal identification number, **characterized in that**
- for execution control of the first use, the processor chip card is first provided by the card manufacturer or card personalizer with an additional application, preferably using the SIM Application Toolkit, which prevents its use in the network, instead allowing only local use by means of a card reader or card terminal, preferably a mobile phone device, and
- upon the first use of the processor chip card, the application outputs without a further check of a secret number a display signal for the first use and a request for confirmation, and
- after receiving a confirmation signal the additional application is deactivated or its execution so changed that upon the next use of the card a display signal is outputted to indicate that the card has already been put into operation and the use of the processor chip card in the network is enabled.

2. A method according to claim 1, **characterized in that** a personal identification number previously defined, preferably by the card manufacturer or card personalizer, must be inputted for activating the additional application.

3. A method according to claim 1 or 2, **characterized in that** the entry of a personal identification number (PIN) and/or a secret number (PUK) for changing or unblocking the personal identification number (PIN) is requested after the first use of the card and prior to the deactivation or change of state of the additional application.

4. A method according to any of claims 1 to 3, **characterized in that** some or all personal identification numbers on the card were already personalized on the processor chip card by the card manufacturer and said numbers are indicated upon the first use for later use on the card reader or card terminal, preferably a mobile phone device.

5. A method according to any of claims 1 to 4, **characterized in that** some or all personal identification numbers on the card are set by a random-number generator built into the card and said numbers are indicated during the first use on the card reader or card terminal, preferably a mobile phone device.

6. A method according to any of claims 1 to 5, **characterized in that** some or all personal identification numbers are combined for transmission to the network, preferably in encrypted form via a data channel, and sent immediately or at a later time to a central place at the network operator or network service provider.

7. A method according to any of claims 1 to 6, **characterized in that** the secret numbers to be defined at the first putting into operation are used not for the purpose of protecting the network application but for protecting an additional application, preferably a SIM Application Toolkit application, on the SIM card.

8. A method according to any of claims 1 to 7, **characterized in that** information on the first use of the processor chip card and on the personal identification numbers is outputted or inputted via the hearing or speaking devices of the card reader, the card terminal or preferably the mobile phone device.

9. A chip card having a microprocessor (µ*P*), a memory area (*M*) and an interface (S) each connected with the microprocessor (µ*P*) for a method for putting into operation the chip card for a network for communication, preferably a GSM network, wherein the card user must identify himself with respect to the chip card by a personal identification number, **characterized by**
- a memory area (*A*) where an application for the execution control of the first use of the chip card is stored, equipped such that for execution control of the first use, the chip card is provided with an additional application, preferably using the SIM Application Toolkit, which prevents its use in the network, instead allowing only local use by means of a card reader or card terminal, preferably a mobile phone device, and
- a secret memory area (*Mg*) where data on said application are stored in protected fashion, equipped such that upon the first use of the chip card, the application outputs without a further check of a secret number a display signal for the first use and a request for confirmation, and after receiving a confirmation signal the additional application is deactivated or its execution so changed that upon the next use of the card a display signal is outputted to indicate that the card has already been put into operation and the use of the processor chip card in the network is enabled.

## Revendications

1. Procédé pour la mise en service d'une carte à puce à processeur pour un réseau pour la communication, de préférence un réseau GSM, dans lequel l'utilisateur de carte doit justifier son identité vis-à-vis de la carte à puce à processeur (SIM) par un numéro confidentiel personnel, **caractérisé en ce que**
- pour le contrôle d'exécution de la première utilisation, la carte à puce à processeur est pourvue initialement, par le fabricant de cartes ou le personnalisateur de cartes, d'une application supplémentaire, de préférence à l'aide du SAT (*SIM Application Toolkit*), qui empêche l'utilisation pour l'usage dans le réseau et, à la place, permet seulement une utilisation locale au moyen d'un lecteur de cartes ou d'un terminal à cartes, de préférence un appareil téléphonique mobile, et
- lors de la première utilisation de la carte à puce à processeur, l'application émet, sans autre vérification d'un code confidentiel, un signal d'affichage pour le premier usage et une demande de confirmation, et
- après réception d'un signal de confirmation, l'application supplémentaire est désactivée ou son exécution modifiée de façon telle que, lors de la prochaine utilisation de la carte, un signal d'affichage est émis, lequel indique que la première mise en service a déjà eu lieu, et que l'utilisation de la carte à puce à processeur est autorisée dans le réseau.

2. Procédé selon la revendication 1, **caractérisé en ce qu'**un code confidentiel personnel défini auparavant, en priorité par le fabricant de cartes ou le personnalisateur de cartes, doit être saisi pour l'activation de l'application supplémentaire.

3. Procédé selon les revendications 1 ou 2, **caractérisé en ce que** la saisie d'un code confidentiel personnel (PIN) et/ou d'un code confidentiel (PUK) pour la modification ou le déblocage du code confidentiel personnel (PIN) est demandée après la première utilisation de la carte et avant la désactivation ou le changement d'état de l'application supplémentaire.

4. Procédé selon l'une des revendications 1 à 3, **caractérisé en ce que** tout ou partie des codes confidentiels personnels sur la carte ont déjà été personnalisés par le fabricant de cartes sur la carte à puce à processeur, et ces codes confidentiels sont affichés lors de la première utilisation en vue de l'emploi ultérieur sur le lecteur de cartes ou le terminal à cartes, de préférence un appareil téléphonique mobile.

5. Procédé selon l'une des revendications 1 à 4, **caractérisé en ce que** tout ou partie des codes confidentiels personnels sur la carte sont prédéfinis par un générateur de nombres aléatoires incorporé dans la carte, et ces codes confidentiels sont affichés pendant la première utilisation sur le lecteur de cartes ou le terminal à cartes, de préférence un appareil téléphonique mobile.

6. Procédé selon l'une des revendications 1 à 5, **caractérisé en ce que** tout ou partie des codes confidentiels personnels sont regroupés pour la transmission au réseau, de préférence sous forme chiffrée, via un canal de données, et envoyés directement ou à un moment ultérieur à un service central auprès de l'opérateur de réseau ou du fournisseur de services de réseau.

7. Procédé selon l'une des revendications 1 à 6, **caractérisé en ce que** les codes confidentiels à définir lors de la première mise en service ne sont pas utilisés dans le but de protéger l'application réseau, mais plutôt dans celui de protéger une application supplémentaire sur la carte SIM, en priorité une application SAT (*SIM Application Toolkit*).

8. Procédé selon l'une des revendications 1 à 7, **caractérisé en ce que** des informations sur la première utilisation de la carte à puce à processeur et sur les codes confidentiels personnels sont émises ou saisies sur les dispositifs auditifs ou vocaux du lecteur de cartes, du terminal à cartes ou, de préférence, de l'appareil téléphonique mobile.

9. Carte à puce avec un microprocesseur (µP), une zone mémoire (M) et une interface (S), lesquelles sont connectées respectivement au microprocesseur (µP), pour un procédé pour la mise en service de la carte à puce dans un réseau pour la communication, de préférence un réseau GSM, dans lequel l'utilisateur de carte doit justifier son identité vis-à-vis de la carte à puce par un numéro confidentiel personnel, **caractérisée par**
une zone de mémoire (A), dans laquelle une application pour le contrôle d'exécution de la première utilisation de la carte à puce est stockée en mémoire, équipée de telle façon que, pour le contrôle d'exécution de la première utilisation, la carte à puce est pourvue d'une application supplémentaire, de préférence à l'aide de la SAT (*SIM Application Toolkit*), qui empêche l'utilisation en vue de l'usage dans le réseau et, au lieu de cela, permet seulement une utilisation locale au moyen d'un lecteur de cartes ou d'un terminal à cartes, de préférence un appareil téléphonique mobile, et
une zone de mémoire secrète (Mg), dans laquelle des données sur cette application sont stockées en mémoire de façon sécurisée, équipée de telle façon que lors de la première utilisation de la carte à puce, l'application émet, sans vérification supplémentaire d'un code confidentiel, un signal d'affichage pour un premier usage et une demande de confirmation et, après réception d'un signal de confirmation, l'application supplémentaire est désactivée ou son fonctionnement est modifié, de telle sorte que, lors de la prochaine utilisation de la carte, un signal d'affichage soit émis, lequel indique que la première mise en service a déjà eu lieu et que l'utilisation de la carte à puce à processeur est autorisée dans le réseau.
